Europäisches Patentamt

European Patent Office

Office européen des brevets

(11) Publication number: **0 286 193**
A2

# EUROPEAN PATENT APPLICATION

(21) Application number: 88200655.4

(51) Int. Cl.4: **G01K 7/20** , **G01K 3/14**

(22) Date of filing: 06.04.88

(30) Priority: 06.04.87 NL 8700806

(43) Date of publication of application:
**12.10.88 Bulletin 88/41**

(84) Designated Contracting States:
**AT BE CH DE ES FR GB GR IT LI LU NL SE**

(71) Applicant: **DAALDEROP B.V.**
**Binnenhoek 34**
**NL-4005 CB Tiel(NL)**

(72) Inventor: **Van Noordenburg, Fredericus**
**Cornelis Marianus**
**Prinses Marielaan 11**
**NL-3818 HL Amersfoort(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) Apparatus for measuring the heat contents of a tank filled with liquid.

(57) An apparatus for measuring the heat contents of a hot water tank (2) is provided with an elongated temperature sensor (5) being in heat transfer relationship with the liquid in the tank along at least a substantial part of the height of the tank (2). The temperature sensor (5) provides a signal dependent on the average temperature along its length to a processing circuit (R1, R2, R3, 7, 8) which controls a display means (9) for indicating the heat contents.

fig.1

EP 0 286 193 A2

## Apparatus for measuring the heat contents of a tank filled with a liquid.

The invention relates to an apparatus for measuring the heat contents of a tank filled with a liquid, in particular a hot water tank.

It is not easy for the user of a hot water supply apparatus, like for example an electric boiler, to determine the average temperature of the water in the apparatus. Although it is possible to determine the temperature of the hot water streaming out of the apparatus, the mixing of the cold water streaming into the apparatus with the hot water therein will only take place slowly when the heating element is switched off, so that it is possible that there is only a small amount of hot water in the top portion of the apparatus, from where the hot water is delivered, while the remaining part of the apparatus is filled with cold water.

The invention aims to provide an apparatus by means of which an indication of the heat contents of the hot water supply apparatus can be provided in a simple manner.

To this end the apparatus of the above mentioned type according to the invention is characterized by an elongated temperature sensor being in heat transfer relationship with the liquid in the tank along at least a substantial part of the height of the tank and providing a signal dependent on the average temperature along its length to a processing circuit which controls a display means for indicating the heat contents.

In this manner the user of a hot water tank for example can easily determine the heat contents of the hot water supply and with the help thereof for example decide whether or not to switch on the heating element.

According to a very simple embodiment the temperature sensor consists of an elongated resistor element connected in a voltage divider.

The invention will be further explained by reference to the drawings, in which an embodiment of the apparatus according to the invention is shown.

Fig. 1 schematically shows a hot water supply apparatus partly in cross-section, provided with an embodiment of the apparatus according to the invention.

Fig. 2 shows a schematic circuit diagram of the apparatus of fig. 1.

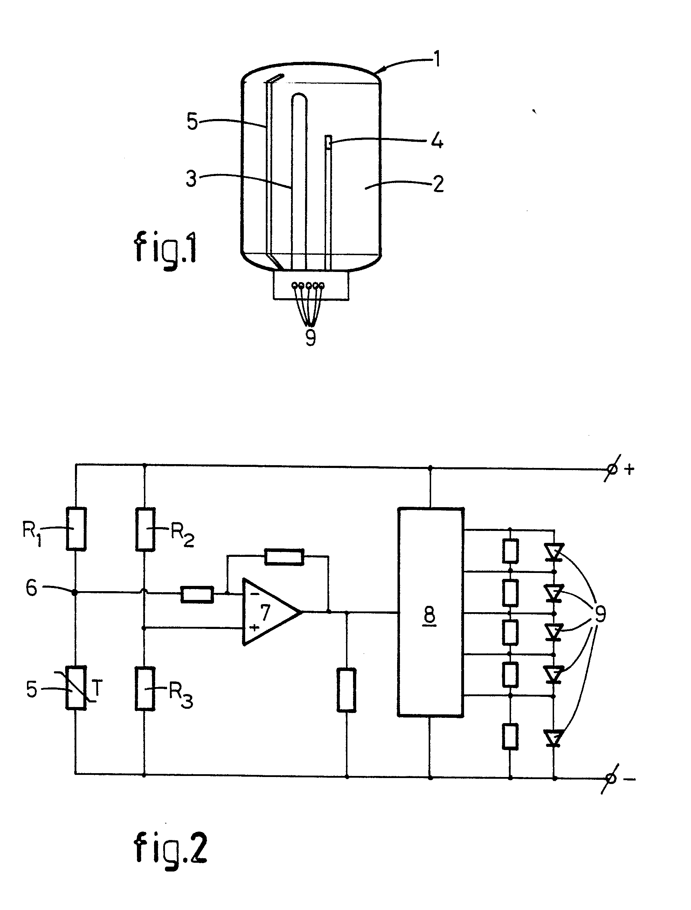

Referring to fig. 1 there is shown an electric boiler 1 comprising a hot water supply tank 2, in which an electric heating element 3 is mounted and further an electric temperature sensor 4 is disposed on a support. The temperature sensor 4 is connected to a control circuit not shown which forms no part of the invention and is not further described.

An elongated resistor element 5 is provided on the inner wall of the hot water tank 2, which resistor element 5 operates as temperature sensor and is series connected with a resistor $R_1$ between the positive and negative terminals of a power source not shown in fig. 2 . The junction 6 of the resistor element 5 and the resistor $R_1$ is coupled with the minus input of an operational amplifier 7, the plus input of which is set on a predetermined voltage by means of resistors $R_2$ and $R_3$. The output of the operational amplifier 7 provides an amplified voltage depending on the resistance of the resistor element 5 and therefore on the average temperature along the length of the resistor element 5. Because the resistor element 5 is in a heat transfer relationship with the hot water in the tank 2 along substantially the whole height of the tank 2, this voltage is proportional to the heat contents of the hot water supply.

The output of the amplifier 7 is connected to an integrated circuit 8, which switches on one or more light emitting diodes 9. When the heat contents is at its maximum, all diodes 9 are burning, whereas at a minimal heat contents all diodes 9 are switched off.

According to the embodiment shown the diodes 9 can be mounted in the boiler 1. However, it is also possible to mount the circuit shown in fig. 2 of course without the resistor element 5 in a separate casing which for example is disposed in the kitchen of a dwelling-house.

Although the resistor element 5 is provided on the inner wall of the hot water tank 2 in the embodiment shown, the resistor element 5 can also be provided on the outer side of the hot water tank 2. Further it is possible to dispose the resistor element 5 on a separate support or on the support of the temperature sensor 4.

Of course another type of display means can be used instead of the light emitting diodes 9.

In the described embodiment of the apparatus a separate temperature sensor 4 is provided in the usual manner for controlling the heating element 3 through the control circuit not further shown. According to an alternative embodiment it is possible to omit the temperature sensor 4 and to connect the resistor element 5 to the control circuit, so that the heating element 3 is controlled in response to the heat contents of the boiler 1.

The invention is therefore not restricted to the above described embodiment, which can be varied in a number of ways within the scope of the invention.

**Claims**

1. Apparatus for measuring the heat contents of a tank (2) filled with a liquid, in particular a hot water tank, **characterized** by an elongated temperature sensor (5) being in heat transfer relationship with the liquid in the tank along at least a substantial part of the height of the tank (2) and providing a signal dependent on the average temperature along its length to a processing circuit (R1, R2, R3, 7, 8) which controls a display means (9) for indicating the heat contents.

2. Apparatus according to claim 1, **characterized** in that the temperature sensor (5) consists of an elongated resistor element connected in a voltage divider (R1, 5).

3. Apparatus according to claim 1 or 2, **characterized** in that the resistor element (5) is applied on the wall of the tank (2).

4. Apparatus according to anyone of the preceding claims, **characterized** in that the processing circuit comprises an amplifier (7) and a led-driver (8) connected to the amplifier, wherein the display means includes a plurality of light emitting diodes (9) connected to said driver.

5. Apparatus according to anyone of the preceding claims, **characterized** in that the elongated temperature sensor (5) is connected to a control circuit for controlling a heating element (3) of the tank (2).

6. Boiler (1), **characterized** by an apparatus according to anyone of the preceding claims.

fig.1

fig.2